# EUROPEAN PATENT SPECIFICATION

(11) **EP 0 716 158 B1**
(45) Date of publication and mention of the grant of the patent: **23.09.1998**
(21) Application number: 95308825.9
(22) Date of filing: 06.12.1995
(51) Int. Cl.: C23C 4/04

(54) **Method of making engine blocks with coated cylinder bores**
Verfahren zur Herstellung von Motorblöcken mit beschichteten Zylinderbohrungen
Procédé de fabrication de blocs moteurs avec des désages de cylindres revêtus

(30) Priority: 09.12.1994 US 352490
(43) Date of publication of application: 12.06.1996
(73) Proprietor: FORD MOTOR COMPANY LIMITED, Brentwood Essex (GB); FORD-WERKE AKTIENGESELLSCHAFT, 50735 Köln (DE); Ford Motor Company, Dearborn, MI 48126 (US)
(72) Inventor: Fucinari, Carlo A., Farmington Hills, Michigan 48336 (US); Rao, V. Durga Nageswar, Bloomfield Township, Michigan 48302 (US); Rose, Robert A., Grosse Pointe Park, Michigan 48230 (US)
(74) Representative: Messulam, Alec Moses

(56) References cited:
- GB-A- 2 273 109
- US-A- 5 080 056
- US-A- 5 194 304
- US-A- 5 302 450
- US-A- 5 363 821

## Description

This invention relates to a method of making metal engine blocks with low-friction and thermally conductive coatings on the cylinder bore walls.

Current aluminium automotive engine blocks are fabricated by first casting the blocks in a casting plant environment that typically is surrounded by air borne particles from core sand reclamation and grit cleaning. Secondly, the block is machined and coated in an independent engine assembly plant. In the engine assembly plant, the blocks, prior to coating, undergo a multitude of preparation steps, such as washing, degreasing, air blasting, rough machining, microfinishing, rough honing (80/100 grit + 200 grit honing), and finish honing, which together are expensive and make the fabricating process considerably slow. The low productivity requires significantly larger capital investments for the plants to achieve required production capacity. In the engine plant, coating of the cylinder bores is usually carried out using materials such as iron or nickel. The iron may be mixed with molybdenum to promote abrasion resistant film with very limited lubricity; the nickel may be combined with aluminium and silicon carbide to permit electroplating (or in some cases electroless plating) of a composite coating that offers abrasion resistance with some limited lubricity. These processes are expensive, slow and do not offer a significantly lower coefficient of friction to allow for an improvement in engine efficiency and fuel economy.

It is an object of this invention to provide a method of more economically making an engine block with improved direct coated cylinder bore walls in a casting plant facility, the coating having a lower coefficient of dry friction which also possesses a high thermal conductivity, to promote improved heat management of the engine.

The invention is a method of making an engine block with coated cylinder bore walls as defined in claim 1 that meets the above object. Preferred embodiments of the claimed method are defined in the dependent claims 2-10. The method comprises (a) casting an engine block of metal (primarily a low cost aluminium alloy such as 319 grade), (b) removing contaminants (the contaminants including casting sand mould material adhering to the casting) from the cast cylinder bore walls to provide at least one annular cleansed fresh metal surface, (c) depositing a plasma sprayed coating onto the surface with a powder mixture containing solid lubricant particles, (d) shaping such coating to be concentric about the true axis of the cylinder bore walls, and (e) honing the coating to final finish smoothness. Preferably the plasma sprayed coating provides a coefficient of dry friction of 0.3 or less. Exposing fresh metal (removal of any metal oxide) can be carried out by grit (shot) blasting, electric discharge erosion, mechanical machining of serrations, or by plasma etching. Concentric shaping may be carried out either by rough machining the cylinder bore walls followed by deposition of the thinnest coating (which requires only finish honing), or by deposition of a thicker coating followed by rough honing of the coating to concentricity. It should be emphasised that use of thin coating followed by a finish honing operation is feasible when the cylinder bore is machined to true concentricity as well as properly aligned to the crankshaft axis. Apparatus heads may be used to robotically integrate the steps of exposing fresh metal and plasma coating, thereby reducing cycle time to as low as 15 seconds.

An advantage of this invention is to increase the effectiveness of cylinder bore wall preparation prior to coating for promoting better adhesion and to reduce the quantity of coating material needed to provide a sound anti-friction coating that has the capability to function satisfactorily in multi-fuel engine operations and is concentric about the true axis of the bores.

The invention will now be described further, by way of example, with reference to the accompanying drawings, in which:
Figure 1 is an illustration of the sequential steps of carrying out the method of this invention;
Figure 2 is an enlarged sectional view of a cylinder bore wall which has been operated upon by machining to provide serrations that expose fresh metal in the method of Figure 1;
Figure 3 is an enlarged portion of Figure 2 showing the character of the serrated machined surface;
Figure 4 is a central elevational sketch of one bank of cylinder bore walls of a typical aluminium V-8 engine showing apparatus in place to grit blast the cylinder bore walls for exposing fresh metal;
Figure 4A is an enlarged view of a portion of the grit blast nozzle;
Figure 5 is a greatly enlarged view of a portion of the cylinder bore wall of Figure 4;
Figure 6 is a central elevational sketch of one bank of cylinder bore walls of a typical aluminium V-8 engine, showing apparatus in place for carrying out plasma etching of the cylinder bore walls for exposing fresh metal as part of the method of Figure 1;
Figure 7 is a greatly enlarged view of a portion of the cylinder bore wall of Figure 6 illustrating the effect of plasma etching;
Figure 8 is a sketch of a typical aluminium engine block immersed in an electrolyte bath utilised for carrying out electric discharge erosion of the cylinder bore walls, the remaining surfaces of the block being masked to prevent their erosion;
Figure 9 is a greatly enlarged view of a portion of the cylinder bore wall that results from electric discharge machining;
Figure 10 is a cross sectional sketch of an engine block illustrating the carrying out of plasma spraying of the bore surfaces;
Figure 11 is a central sectional elevational view of the construction of Figure 10 taken along line 11-11 of such figure;
Figure 12 is a greatly enlarged view of the nozzle of a plasma spray gun showing how the coating is applied and deposited;
Figure 13 is a greatly enlarged view of a portion of the plasma stream as it is depicted in Figure 12; and
Figure 14 is a sketch of a portion of the coating as it is applied by the plasma deposition.

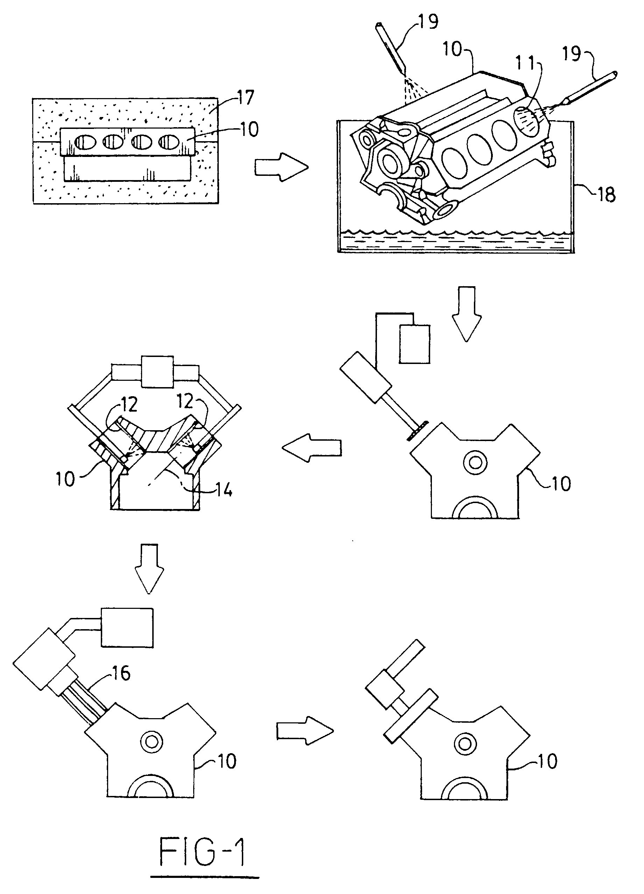

The new steps of this invention to produce an engine block 10, having unique anti-friction plasma coated cylinder bore walls eliminates many prior operations, such as expensive microsizing machining; this is brought about by more accurately centring the coated surface about the true axis of the cylinder bore walls in conjunction with coating thickness control which thereby reduces the cost and improves the quality of coating. The essential steps (as shown in Figure 1) comprise: casting the engine block shape 10, preparing each cylinder bore wall 11 to be free of contaminants by cleaning and surface preparation, plasma depositing an anti-friction coating 12, centring the exposed surface 13 of the coating to the true axis 14 of the cylinder bore wall 11 by one of (i) tracking a centred substrate surface 15 during deposition, or (ii) laying a track for a centred shaping tool 16, such as a honer, and honing the centred coating to the final shape if not already honed.

Casting the engine block 10 can be by sand moulding (such as in a mould 17), shell moulding (permanent or semi-permanent) die casting, or other commercially acceptable casting technique. Sand moulding is advantageous because it provides good product definition with optimum economy for large scale production. The casting process should be controlled in the following manner to ensure proper preparation of the eventual coating for the cylinder bore: the bores should be as perfectly centred as possible maintaining the same bore wall thickness. The bore surface can be cast as serrated by use of proper coring or machined to provide precise spiral serrations; the ridges of the serrations support loading for the coating system and, if machined, provide fresh metal on which the coating system is bonded.

### Surface Preparation

Contamination-free preparation involves first cleaning the engine block . This may involve degreasing if the moulding technique tends to leave a residue or grit blasting if no residue. The degreased or blasted block is then washed to remove loose sand or grit particles in the case of sand or sand moulding techniques. Degreasing may be carried out with OSHA approved solvents, such as ethylene dichloride, followed by rinsing with isopropyl alcohol. The degreasing may be carried out in a vapour form such as in a chamber having the solvent heated to a temperature of approximately 10°C (50°F ) above the boiling point of the degreasing fluid. Washing may be carried out by use of high pressure water jets or by dipping into a bath 18 as shown in Figure 1. After washing, the blocks 10 are subjected to oil-free air jets 19 that release all moisture from the blocks. Alternately a high pressure clearing process commercially known as "hydroblast" can be used which will obviate the need for grit blasting/washing/rinsing, etc. It is important that the bore surfaces to be coated be completely free of grease; aluminium castings tend to have occasional porosity which can harbour oils. Any occluded oils or cleaning fluids must be completely removed. Even with vapour degreasing, it is necessary to clean with oil-free compressed air followed by warming the block (around 82,2°C (180°F)). However, in the event of high quality casting operations, such as from low pressure die casting, porosity is not much of a problem.

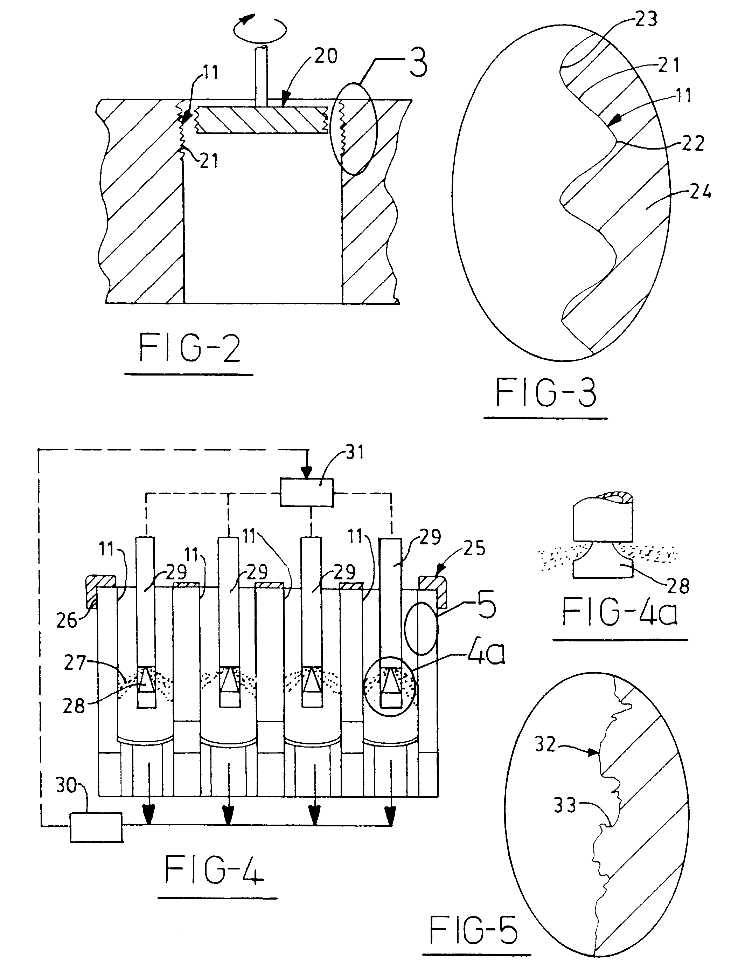

Next, fresh metal of the cylinder bore walls must be exposed immediately prior to plasma deposition of the coating. This can be carried out by one of (i) machining a fresh surface by flat milling or serration milling, (ii) grit blasting, and (iii) plasma etching. Serration milling employs a tool 20 that mills annular serrations 21 as shown in Figures 2 and 3 along the wall 11 to be coated; the serrations provide ridges 22 and valleys 23. The valleys later will receive the coating 24 preferably even with the ridges. The longitudinally separated ridges serve as a load supporting mechanism for carrying components, such as a piston, riding along the ridges of the serrated surface. A coated serrated surface has the following characteristics: oil retention capability with very small pore size and good load bearing capability, reduced oil consumption, and excellent coating adhesion (bond strength in excess of 493 Kg/cm² (7000 psi) on the basis of ASTM C-633 procedure).

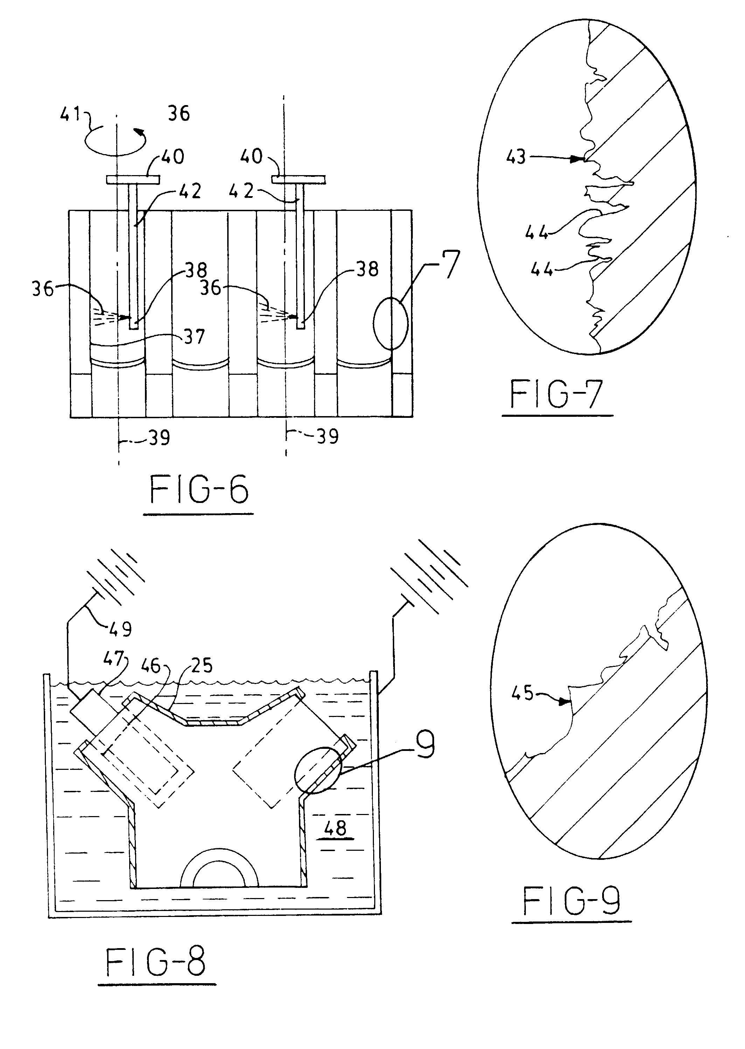

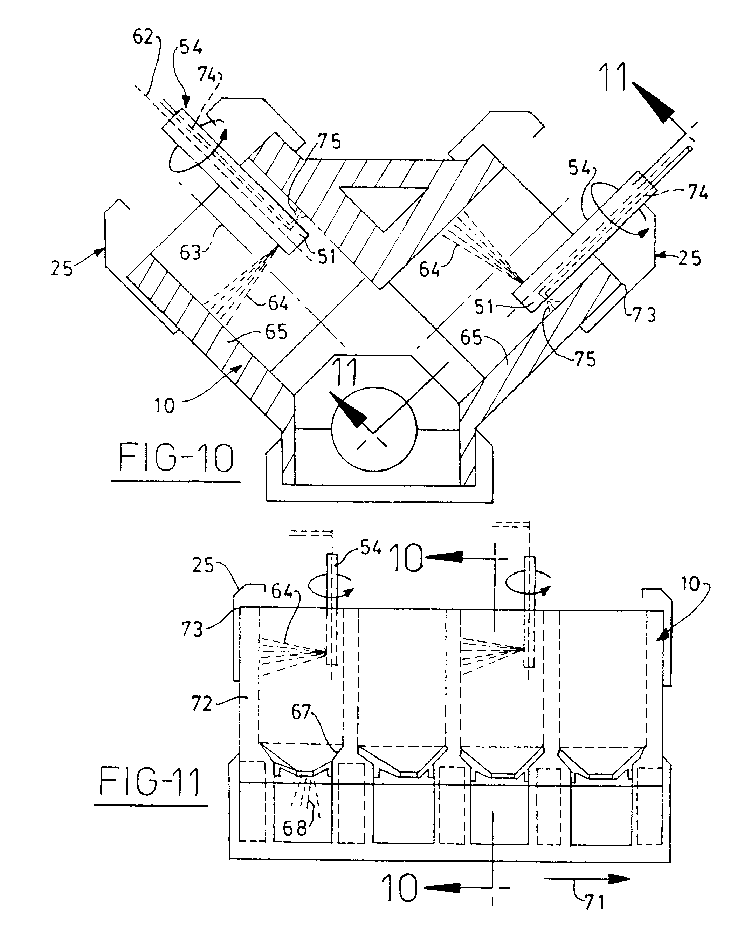

Alternatively the fresh metal may be exposed by grit (shot) blasting as shown in Figures 4 and 5. Exposure of fresh metal is necessary to provide an excellent metallurgical bond between the aluminium or metal surface of the engine block wall and the metallised coating. With grit blasting, it may be desirable to first mask the adjacent surfaces of the engine block to protect the surfaces that are not to be grit blasted. Masking 25 can be of the type shown in Figure 10; a high temperature elastomer is moulded to the block as shown. Such elastomer is flexible enough to cling to the block surface 26 and will prevent overspray from the grit blasting so that the block will suffer no damage from impinging grit 27 and from excessive coating material during plasma spraying if the mask remains; the overspray will loosely adhere to the elastomer mask material 25 for removal by conventional cleaning procedures so that the mask can be reused. Alternatively, the masking 26 may be a modified printer's ink which is sufficient to hold against grit blasting and during coating overspray; thence it is easily removed by high pressure water spray cleaning following the plasma spray coating step.

The grit 27 or shot is controlled to have a particle size in the range of 0.045-0.20 mm (45-200 microns), and preferably is aluminium oxide particles having an angular shape. The grit 27 is directed under a pressure of about 0.35 to 3.5 Kg/cm² (5 to 50 psi), to impinge on a conical nozzle 28 which in turn spreads the grit in a 360° flow pattern to abrade the full annular cylinder wall 11. Usually only one pass, up and down the length of the cylinder bore surface that is to be blasted, is necessary for the tool 29 carrying the nozzle 28. The grit is retrieved and recycled from the cylinder bores by a suction device 30 which is an integral part of the gritblasting apparatus 31. Any remaining grit on the cylinder bore walls is easily removed by high pressure oil-free air blasting (which may be followed by rinsing and air jetting). The grit blasted fresh surface 32 will appear generally as shown in Figure 5 having micro sized indentations 33.

Still another alternative (as shown in Figures 6 and 7) for exposing fresh metal can comprise the use of plasma etching wherein a halogenated fluid material 34 is flowed through an electric arc 35, releasing ionised halogen atoms 36 (plasma stream) . This plasma stream of halogen atoms is impacted against the engine block cylinder wall surface 37 to preferentially attack the aluminium surface and expose a fresh aluminium surface. Etching is defined to mean use of a fluid that metallurgically reacts with aluminium and other metals (Si, Cu, Mg, Zn) in the casting alloy to create a surface roughness or porosity. The plasma head 38 that delivers the etchant to the surface can be preferentially adapted to spray the material across the axis 39 of the cylinder bore wall to the oppositely disposed wall surface. A support plate 40 carrying the head 38 can conveniently revolve the spray gun around an arcuate path 41 during the up and down motion of the gun 42 itself. The temperature and pressure conditions for carrying out plasma etching are adjusted through control of arc current and the gas flow. The energy input is approximately 5 to 15 KW. The plasma carrier gas is usually high purity argon with 1 to 5% of a halogenated fluid. This fluid can be freon, trichloro methane ethylene, or trichloride of the fluorinated hydrocarbon family. The resulting plasma etched surface 43 will appear as shown in Figure 7 and is characterised by a very bright highly uneven surface (fissures 44) which is very reactive. Because of this high reactivity, very strong bond between the surface 43 and the coating will be produced.

Yet still another alternative for exposing fresh metal can be that of using electrical discharge erosion (see Figures 8 and 9) to create a nonsmooth, nonpassivated surface 45 for mechanical bonding of the thermal spray coating. Electrical discharge erosion essentially comprises melting and rapidly solidifying globules of the unexposed bore surface 46 to be coated by electrical discharge. The melting and rapid solidifying takes place by (a) bringing an electrode (anode) 47 in close-gap-sparking proximity to the surface 46, (b) filling the gap with an electrolyte 48 containing a halogenated hydrocarbon fluid present in an amount of about 2-5% of the electrolyte, and (c) imposing a pulse DC voltage 49 on the electrode to provide cyclical sparking between the electrode and the surface through the electrolyte resulting in a breakdown of the hydrocarbon electrolyte to release nascent halogen atoms which attack the surface to prevent passivation during melting and solidification of the globules. The electrolyte 48 is preferably cooled to a temperature below 18°C (65°F) during the sparking, and the halogenated hydrocarbon is present in sufficient amount to attack silicon and aluminium, if such surface is an aluminium alloy containing silicon. The engine block can again be masked by the techniques described above to prevent erosion of surfaces other than that desired of the cylinder bore walls. The resulting surface created by electrical discharge erosion is that as shown in Figure 9 and is characterised by clear, bright highly irregular and reactive surface 45.

The parameters for carrying out electrical discharge erosion are those as disclosed in co-pending European Patent Application No. 95306121.9, filed 4 September, 1995.

### Plasma Spraying

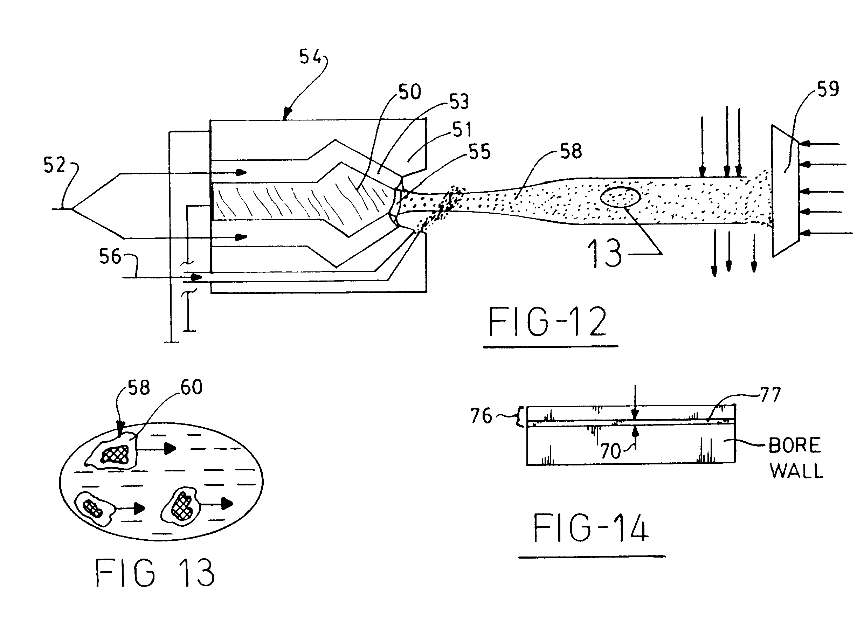

A plasma is created (as shown in Figures 12 and 13) by an electric arc struck between a tungsten cathode 50 and an nozzle shaped copper anode 51, which ionises argon and hydrogen gas molecules 52 passed into the chamber 53 of the spray gun 54. Due to the design geometry of the cathode/anode, the ionised gas 52, being at very high temperature (passing through the electric arc 55) and being highly conductive, is accelerated to very high speed velocity (as much as 300 to 700 meters per second). By injecting powders 56 axially into the plasma flame 57, powder particles 58 can reach speeds of about 600 meters per second before impacting onto a target 59. The deposition rate can range between 2-10 kilograms per hour. The inert gas such as argon with hydrogen is propelled into the gun at a pressure of about 0.14 to 1.76 Kg/cm² (2 to 25 psi), and at ambient temperature. The feed supply consists of a metallised powder which at least has a shell 60 of metal that softens during the very quick transient temperature heating in the plasma flame, the softened particles then being splattered on the target surface as a result of the high velocity of spraying.

The powder particles 58 can be, for purposes of this invention, any one of (i) steel or iron oxide and iron alloy with Ni, Mn, Cr and C particles, which have a low coefficient of dry friction, (ii) a nonoxided steel or other metal which is mixed with solid lubricant selected from the group consisting of graphite, MoS₂, BN, LiF₂, or eutectics of LiF/NaF₂ or CaF₂/NaF₂; and (iii) metal encapsulated or composite solid lubricants or a metal-solid film lubricant composite of the type described in (ii). It is important that the chemistry of these powders all present a dry coefficient of friction which is less than .4 and present a high degree of flowability for purposes of being injected into the plasma spray gun.

Introducing the plasma spray to the cylinder bore is shown in some detail in Figures 10 and 11, wherein a gun 54 carrying a nozzle 57 at its bottom portion is rotated about an axis 62 eccentric with respect to the central axis 63 of the cylinder bore so that the spray pattern 64 of heated powder traverses a path across the axis 63 of the cylinder bore before reaching the opposite target surface 65. The gun 54 is not only arcuately carried around a path surrounding the axis of the cylinder bore, but the gun is also raised and lowered usually in one pass, to present a first coating layer 76 (see Figure 14) in the thickness 70 of 0.1-0.25 mm (100 to 250 microns). The rate of deposition should be about 5 to 10 kilograms per hour to provide approximately 92% deposition efficiency. Overspray 68, (particles that do not adhere to the intended surface) are collected in a trough 67 and recycled for reuse through the gun 54 for subsequent plasma spraying. Inaccurate spraying can be substantially eliminated by use of a robot 69 which accurately carries the rotating gun 54 in a precise manner to spray the intended target; the robot can regulate the particle size of the powder so that the pattern 64 can be concentrated in a focused spray. Use of suction 71 below the bottom of the block 72 to draw the loose overspray particles 68 for recycling. Masking 25 of the type previously described for plasma etching and grit blasting can be used; a moulded elastomer is applied over the edges 73 of the block adjacent the cylinder bore walls to prevent adherence of any material outside the intended cylinder bore surfaces. In addition to the gun 54 for carrying powder and generating a plasma, an adjacent channel 74 in such gun may be provided to carry air cooling jets 75 so that air may exit from the gun nozzle in a direction opposite to that of the plasma spray pattern; thus the air hardenable material, contained in the powder particles, may be immediately subjected to air cooling and hardening of the coated surface.

The deposited material should be controlled to the thickness 76 of 0.175 to 0.300 mm (175 to 300 microns) when the bores are perfectly centred [within ± 0.015 mm (±15 microns) on centre] or 0.5 to 0.75 mm (500 to 750 microns) thick in the case when bore centres are off by ≅ 0.5 mm condition, and may be deposited in one or more layers to achieve such thickness. If the cylinder bore wall surfaces have been prepared to be coincident with the true axis of the cylinder bore walls, a thinner coating of solid lubricants can be applied in the range of 0.225-0.300 mm (225-300 microns), the coating tracking the identical dimension of the cylinder bore surface so that the inner coated or exposed surface of the coating will also have an exact concentricity with the axis 63 of the cylinder bore. If the cylinder bore surfaces have not been previously prepared to be concentric, the coating surface can be increased to a thickness range (not according to the invention) of 0.300-0.700 mm (300-700 microns) wherein subsequent rough honing operations can create the concentricity of the inner surface, the honing tool providing the tracking surface for creating the exact alignment of the finished surface.

To ensure an even greater metallurgical bond between the coating and the substrate, a bond coating 77 may be interposed such as nickel aluminide (containing 6-10% aluminum and the remainder nickel or stainless steel such as 434, 420 or 80/20 nickel chrome alloy). This also may be applied as a plasma spray coating prior to the deposition of the solid lubricant containing coating.

The ultimate coating is characterised by the following: it has an adhesion of at least 493-670 Kg/cm² (7000-9500 psi) [can be 211-352 Kg/cm² (3000-5000 psi) for freshly machined surface without any other surface preparation] as determined by ASTM-C-633 test, the presence of a series of micro pores which allow the adsorption of oil therein to constantly replenish an oil film on the cylinder bore wall during normal operation, the pore size being in a range of 0.005 to 0.040 mm (5 to 40 microns) with at least 70% being less than 0.001 mm (10 microns). Total porosity not to exceed 10% to present not only a low coefficient of friction but a load bearing capacity in excess of 105 Kg/cm² (1500 psi) of the maximum unit load exerted by the piston rings (≅ 140 Kg/cm²) (≅ 2000 psi).

Both the plasma spraying steps and the subsequent honing steps as will be described, should both be carried out preferentially with the use of dual or triple banks of guns 54 held on one single fixture controlled by a single or feedback controlled automatic robot device. For example, the plasma spraying may have a series of two guns adapted to be inserted in the first and third bores of a single bank of four open cylinder bores which, when withdrawn and indexed over, can then be injected to spray the second and fourth bores, thereby increasing productivity. This arrangement also facilitates the insertion of high pressure cooling air jets in the cylinders that have been but are not being coated, the heat of coating is rapidly dissipated and bore thermal distortion is avoided. This additional air also acts as additional carrier of the overspray to the dust collection system for recycling the collected powder. Similarly, the honing tools may be carried on a fixture so that a series of stepped honing grits may be applied by indexing over the supporting tool fixture to operate sequentially on each bore. Honing is the final step of the process and preferably involves plateau honing, that is, the coated surface is first subjected to a grit of 90/100 to remove approximately 0.05 mm (50 microns) of the coated surface, secondly, it is subjected to a grit of 300/400 where an additional 0.01/0.025 mm (10/25 microns) of thickness is removed and finally a 600 grit honing tool is applied to provide a smooth surface with very little removal of the coating. Each of these grit sizes or honing tools can be carried on a separate shaft connected to a common fixture so that they may be coordinately indexed over to carry out the sequence of plateau honing on each of the bores. The result is an extremely accurately finished coating surface which can be designed to be in much closer proximity to the operating piston therein while offering highly reduced friction and allowing for thermal conductivity so that the compression ratio of the engine combustion process can be maintained at higher levels. Particularly noteworthy is that the "honing" tool follows the surface contour.

When the bores are perfectly centred and the coating is uniformly applied on the entire bore surface and the heat is properly managed to prevent bore distortion, the maximum variation is ± 0.015mm (± 15 microns), no premachining of the coated bores is needed. Honing is carried out directly after coating, achieving minimum material application and removal to clean up. This results in significant cost savings. In case of off centre bores or non-precision centred bores, a microsizing machining operation is carried out prior to honing. Various tests have been carried out to compare the effect of the anti-friction coating applied in accordance with the method of this invention. The engine torque was measured first at 1500 rpm for a test engine containing coated cylinder bores embodying this invention and also at 750 rpm. The level of drive torque for an uncoated or current production type of cylinder bore wall surface of cast iron is shown to be considerably higher than that for the other coated surfaces each illustrating the difference resulting from different chemistry of the coating. For example, iron-iron oxide is shown also, a mixture of hardenable steel and solid lubricants, and thirdly, metal encapsulated solid lubricant particles.

Similarly, a comparison of the fuel consumption for cylinder bores that are uncoated verses those that are coated was made. It is quite apparent that reduction in friction of the coated bores according to this invention along with their ability to maintain proper thermal conductivity achieves much greater fuel economy.

## Claims

1. A method of making an engine block with coated cylinder bore walls, comprising:
(a) casting an engine block (10) of aluminium alloy;
(b) surface treating the cast cylinder walls (11) to remove contaminants and provide a cleansed surface;
(c) exposing fresh metal at the cleansed surface to provide a surface (13) for bonding; and
(d) depositing a plasma sprayed coating (12) onto the exposed fresh metal surface (13) with a powder mixture containing solid lubricant particles;
characterised in that;
the method steps are performed in a casting plant facility within which the engine block (10) is cast and the method comprises the further steps of;
(e) centring the exposed surface of the coating to the true axis (14) of the cylinder bores to achieve less than 0.015 mm. variation of the surface from top to bottom of the cylinder by either (i) depositing the coating (12) to a depth between 0.175-0.300 mm. to track a centred surface or (ii) depositing the coating (12) to a depth of between 0.500-0.750 mm. to lay a track for a centred shaping tool (16); and
(f) honing the centred coating to a final finish in plateau steps.

2. A method as claimed in claim 1, in which step (b) is carried out by one of (i) grit blasting followed by high pressure oil-free air blasting; (ii) grit blasting in combination with rough machining prior to plasma coating; and plasma etching utilising freon or other halogenated hydrocarbons.

3. A method as claimed in claim 1 or 2, wherein step (b) is carried out by washing and degreasing.

4. A method as claimed in claim 1, 2 or 3, wherein step (c) is carried out by grit blasting, electric discharge erosion or mechanical machining of serrations.

5. A method as claimed in any one of the preceding claims, wherein the step of plateau honing removes no greater than 0.025-0.030 mm. of the coating.

6. A method as claimed in any one of the preceding claims, in which the said powder mixture comprises solid lubricants selected from the group of ferrous oxides, nickel encapsulating boron nitride, stainless steel mixed with metal encapsulated boron nitride, graphite or molybdenum disulphide, calcium fluoride, lithium fluoride and/or calcium fluoride, lithium fluoride eutectic composition.

7. A method as claimed in any one of the preceding claims, in which steps (c) and (d) employ an integrated single tool head.

8. A method as claimed in claim 7, in which the integrated tool head is effective to plasma etch the cleansed surface to expose fresh metal.

9. A method as claimed in any one of the preceding claims, in which the plasma spraying is carried out to reclaim and/or recirculate the oversprayed powder material back to the spraying operation and the nontargeted surface areas are masked (25) by use of a viscous printer's ink or a high temperature elastomer.

10. A method as claimed in any one of the preceding claims, in which said plasma spraying is carried out to impart dual layers, the first of which is a bond coating of nickel aluminide or 434 SS or 420 SS or 80/20 NiCr with 4 to 10% aluminum composite.

## Patentansprüche

1. Ein Verfahren zur Herstellung eines Motorblocks mit beschichteten Zylinderbohrungswänden, das folgende Schritte umfaßt:
(a) Das Gießen eines Motorblocks (10) aus einer Aluminiumlegierung;
(b) die Oberflächenbehandlung der gegossenen Zylinderwände (11), um Verunreinigungen zu entfernen und eine gereinigte Oberfläche bereitzustellen;
(c) das Bloßlegen frischen Metalls auf der gereinigten Oberfläche, um eine Oberfläche (13) zur Verbindung bereitzustellen; und
(d) das Abscheiden auf der bloßgelegten, frischen Metalloberfläche (13) einer plasmagespritzten Beschichtung (12) mit einem Pulvergemisch, das Festschmierstoffpartikel enthält;
dadurch gekennzeichnet, daß die einzelnen Schritte des Verfahrens in einer Gießanlage durchgeführt werden, in der der Motorblock (10) gegossen wird, und daß das Verfahren die folgenden weiteren Schritte umfaßt:
(e) Das Zentrieren der freigelegten Oberfläche der Beschichtung um die exakte Achse (14) der Zylinderbohrungen, um weniger als 0,015 mm Abweichung der Oberfläche entlang der Gesamthöhe der Bohrung zu erreichen, indem entweder (i) die Beschichtung (12) in einer Stärke zwischen 0,175-0,300 mm abgeschieden wird, um einer zentrierten Oberfläche zu folgen, oder (ii) die Beschichtung (12) in einer Stärke zwischen 0,500-0,750 mm abgeschieden wird, um eine Spur für ein zentriertes formgebendes Werkzeug (16) zu legen; und
(f) das Ziehschleifen der zentrierten Beschichtung zur endgültigen Fertigbearbeitung in Plateauschritten.

2. Ein Verfahren nach Anspruch 1, in dem Schritt (b) entweder (i) durch Sandstrahlen, gefolgt von ölfreiem Hochdruckluftstrahlen; oder (ii) durch Sandstrahlen in Verbindung mit Grobspanen vor der Plasmabeschichtung; und durch Plasmaätzen mit Freon oder anderen halogenhaltigen Kohlenwasserstoffen durchgeführt wird.

3. Ein Verfahren nach den Ansprüchen 1 oder 2, in dem Schritt (b) durch Waschen und Entfetten ausgeführt wird.

4. Ein Verfahren nach den Ansprüchen 1, 2 oder 3, in dem Schritt (c) durch Sandstrahlen, elektrische Entladungserosion oder mechanisches Herstellen von Auszackungen ausgeführt wird.

5. Ein Verfahren nach einem beliebigen der vorstehenden Ansprüche, in dem im Schritt des Plateauziehschleifens nicht mehr als 0,025-0,030 mm der Beschichtung abgetragen werden.

6. Ein Verfahren nach einem beliebigen der vorstehenden Ansprüche, in dem dieses Pulvergemisch Festschmierstoffe umfaßt, die aus der folgenden Reihe ausgewählt werden können: Eisenoxide; nickelumhülltes Bornitrid; Edelstahl gemischt mit metallumhülltem Bornitrid, Graphit oder Molybdändisulfid, Kalziumfluorid, Lithiumfluorid und/oder Calciumfluorid, einer eutektischen Zusammensetzung aus Lithiumfluorid.

7. Ein Verfahren nach einem beliebigen der vorstehenden Ansprüche, in dem bei den Schritten (c) und (d) ein einzelner, integrierter Werkzeugkopf benutzt wird.

8. Ein Verfahren nach Anspruch 7, in dem der integrierte Werkzeugkopf die gereinigte Oberfläche plasmaätzt, um das frische Metall bloßzulegen.

9. Ein Verfahren nach einem beliebigen der vorstehenden Ansprüche, in dem Plasmaspritzen durchgeführt wird, um das überschüssig gespritzte Pulvermaterial zurückzugewinnen und/oder in den Spritzvorgang zurückzuführen, und in der die nicht zur Besprühung vorgesehenen Oberflächen durch eine viskose Druckerschwärze oder ein Hochtemperaturelastomer (25) abgedeckt werden.

10. Ein Verfahren nach einem beliebigen der vorstehenden Ansprüche, in dem dieses Plasmaspritzen durchgeführt wird, um zwei Schichten abzulagern, wobei die erste eine Bindeschicht aus Nickelaluminid oder Edelstahl Typ 434 oder 420 oder 80/20 NiCr mit 4-10% Aluminiumkomposit besteht.

## Revendications

1. Procédé de fabrication d'un bloc-moteur comportant des parois d'alésage de cylindre revêtues, comprenant les étapes consistant à :
(a) mouler un bloc-moteur (10) en alliage d'aluminium,
(b) appliquer un traitement de surface aux parois de cylindre moulé (11) afin d'éliminer les contaminants et d'obtenir une surface nettoyée,
(c) exposer du métal neuf au niveau de la surface nettoyée afin d'obtenir une surface (13) permettant une liaison, et
(d) déposer un revêtement projeté au plasma (12) sur la surface exposée de métal neuf (13) à l'aide d'un mélange en poudre contenant des particules de lubrifiant solide,
caractérisé en ce que
les étapes de procédé sont réalisées dans un atelier de fonderie-moulage dans lequel le bloc-moteur (10) est moulé, et le procédé comprend les étapes supplémentaires consistant à :
(e) centrer la surface exposée du revêtement sur l'axe longitudinal (14) des alésages de cylindre afin d'obtenir moins de 0,015 mm de variation de la surface du haut en bas du cylindre, soit (i) en déposant le revêtement (12) suivant une épaisseur comprise entre 0,175 et 0,300 mm afin de suivre une surface centrée, soit (ii) en déposant le revêtement (12) sur une épaisseur comprise entre 0,500 et 0,750 mm afin de former une voie pour un outil de mise en forme centré (16), et
(f) roder le revêtement centré jusqu'à un état de surface final par paliers successifs.

2. Procédé selon la revendication 1, dans lequel l'étape (b) est effectuée à l'aide d'un procédé parmi (i) une projection d'abrasif suivie d'une projection à haute pression d'air exempt d'huile, (ii) une projection d'abrasif en combinaison avec un usinage grossier avant un revêtement au plasma et une attaque au plasma en utilisant du fréon ou d'autres hydrocarbures halogénés.

3. Procédé selon la revendication 1 ou 2, dans lequel l'étape (b) est effectuée par lavage et dégraissage.

4. Procédé selon la revendication 1, 2 ou 3, dans lequel l'étape (c) est effectuée par projection d'abrasif, érosion par décharge électrique ou usinage mécanique de stries.

5. Procédé selon l'une quelconque des revendications précédentes, dans lequel l'étape de rodage par paliers n'enlève pas plus de 0,025 à 0,030 mm du revêtement.

6. Procédé selon l'une quelconque des revendications précédentes, dans lequel ledit mélange en poudre comprend des lubrifiants solides choisis parmi le groupe composé des oxydes ferreux, du nickel enrobant du nitrure de bore, de l'acier inoxydable mélangé avec du nitrure de bore enrobé de métal, du graphite ou du bisulphure de molybdène, du fluorure de calcium, du fluorure de lithium et/ou une composition eutectique de fluorure de calcium et de fluorure de lithium.

7. Procédé selon l'une quelconque des revendications précédentes, dans lequel les étapes (c) et (d) emploient une seule tête d'outillage intégrée.

8. Procédé selon la revendication 7, dans lequel la tête d'outillage intégrée peut être mise en oeuvre pour attaquer au plasma la surface nettoyée afin d'exposer du métal neuf.

9. Procédé selon l'une quelconque des revendications précédentes, dans lequel la projection au plasma est effectuée de façon à récupérer et/ou refaire circuler le matériau en poudre projeté en excès pour le réintroduire dans l'opération de projection, et les zones de surfaces non visées sont masquées (25) à l'aide d'une encre d'imprimerie visqueuse ou d'un élastomère résistant aux hautes températures.

10. Procédé selon l'une quelconque des revendications précédentes, dans lequel ladite projection au plasma est effectuée de façon à former deux couches, dont la première est un revêtement de liaison fait de nickel-aluminium ou d'acier inoxydable de nuance 434, ou d'acier inoxydable de nuance 420, ou d'un composite de nickel-chrome 80/20 avec 4 à 10% d'aluminium.
